# FASCICULE DE BREVET EUROPEEN

(11) **EP 0 706 252 B1**
(45) Date de publication et mention de la délivrance du brevet: **22.07.1998**
(21) Numéro de dépôt: 95402211.7
(22) Date de dépôt: 03.10.1995
(51) Int. Cl.: H02G 3/18

(54) **Support d'appareillage à rapporter sur une boîte d'encastrement, et bloc de fixation propre à l'équipement d'un tel support d'appareillage**
Geräteträger anzubringen auf einer Einbaudose und Befestigungsteil zum Gebrauch mit solchem Geräteträger
Apparatus support to be mounted on a flush mounted box and fastening block adapted to such an apparatus support

(30) Priorité: 04.10.1994 FR 9411831
(43) Date de publication de la demande: 10.04.1996
(73) Titulaire: LEGRAND, F-87000 Limoges (FR); LEGRAND SNC, F-87000 Limoges (FR)
(72) Inventeur: Brousse,Robert, F-19500 Meyssac (FR)
(74) Mandataire: CABINET BONNET-THIRION

(56) Documents cités:
- DE-A- 3 603 478
- DE-A- 4 033 914

## Description

La présente invention concerne d'une manière générale les supports du type de ceux mis en oeuvre pour rapporter sur une boîte d'encastrement un quelconque appareillage, et, par exemple, un quelconque appareillage électrique tel qu'interrupteur, socle de prise de courant ou autre, lorsque, pour l'emprise du mécanisme d'un tel appareillage dans un quelconque support, et, par exemple, dans un quelconque mur, il est mis en oeuvre une telle boîte d'encastrement.

Ces supports, qui, à ce jour, sont le plus souvent en métal, se présentent sous la forme générale d'un cadre, qu'il s'agit de fixer à la boîte d'encastrement, et qui, par son évidement central, est apte à recevoir le mécanisme de l'appareillage concerné, soit que ce mécanisme lui soit fixé en usine, par exemple par sertissage, soit qu'il lui soit fixé par l'installateur de l'appareillage concerné, par exemple par encliquetage, au gré de cet installateur.

En pratique, la fixation à la boîte d'encastrement se fait soit à l'aide de vis, qui coopèrent en vissage avec des fûts tubulaires prévus à cet effet le long de la paroi de la boîte d'encastrement sur une partie au moins de la hauteur de celle-ci, soit à l'aide de griffes, qui, sous le contrôle chacune d'une vis, sont mobiles entre une position escamotée d'attente, pour laquelle elles permettent la mise en place de l'ensemble dans la boîte d'encastrement, et une position déployée de service, pour laquelle elles viennent s'ancrer dans la paroi de celle-ci.

Pour une fixation par vis, les supports d'appareillage connus à ce jour comportent systématiquement au moins un perçage, et en pratique deux, propres chacun au passage d'une telle vis.

Pour une fixation par griffes, deux solutions sont à ce jour pratiquées.

Suivant la première de ces solutions, il est prévu, d'une part, des supports qui sont effectivement équipés de griffes, et, d'autre part, des supports qui en sont au contraire dépourvus, en laissant à l'installateur le choix entre ceux-ci en fonction, par exemple, des conditions particulières de pose des appareillages concernés.

Les supports d'appareillage devant ainsi faire l'objet en parallèle de deux références distinctes, il en résulte, pour le fabricant, aussi bien que pour l'installateur, une gestion particulièrement lourde et coûteuse de l'ensemble.

Suivant une deuxième solution, les supports d'appareillage sont systématiquement équipés de griffes en sus des perçages propres au passage de vis (DE-A- 4033914).

Il en résulte de manière dispendieuse pour l'ensemble un surcoût qui ne se trouve pas justifié lorsque seule est mise en oeuvre une fixation par vis.

En outre, en raison de leur encombrement propre, les griffes alors présentes peuvent être une gêne pour l'installateur lors d'une telle fixation par vis.

Par une détérioration éventuelle de la gaine isolante des conducteurs électriques avoisinants, elles peuvent également être à l'origine d'accidents électriques.

Pour cette double raison, il est parfois procédé à leur dépose ou à leur destruction préalablement à une fixation par vis, ce qui complique inutilement les opérations correspondantes.

Dans la demande de brevet allemand No 40 33 914, les griffes sont initialement reliées de manière détachable à un châssis qui appartient à l'appareillage à fixer, et, après avoir été détachées de ce châssis, elles ne peuvent plus être rapportées à nouveau sur celui-ci si désiré.

La présente invention a d'une manière générale pour objet une disposition permettant d'éviter ces inconvénients.

De manière plus précise, elle a tout d'abord pour objet un support d'appareillage à rapporter sur une boîte d'encastrement, du genre présentant au moins un perçage propre au passage d'une vis pour sa fixation par vis à une telle boîte d'encastrement, ce support d'appareillage étant d'une manière générale caractérisé en ce que, pour sa fixation éventuelle par griffe(s) à la boîte d'encastrement, il lui est associé, sous la forme d'un sous-ensemble distinct, au moins un bloc de fixation comportant un corps et une griffe qui, sous le contrôle d'une vis montée rotative sur ledit corps, est mobile entre une position escamotée d'attente et une position déployée de service, et en ce qu'il comporte, en attente, un logement, qui est propre à recevoir à la demande un tel bloc de fixation, et qui, pour la commande de la vis correspondante, débouche en façade ; elle a encore pour objet tout bloc de fixation ainsi susceptible d'être mis en oeuvre à la demande sur un tel support d'appareillage.

Tout en laissant à l'installateur le choix du mode de fixation qu'il veut ou doit retenir, la disposition suivant l'invention permet avantageusement d'éviter la fabrication d'un grand nombre d'accessoires non utilisés, en l'espèce les griffes et les vis nécessaires à la commande de celles-ci, et, par-là, elle conduit pour tous à une économie non négligeable, en réduisant le gaspillage correspondant.

En outre, un même type de bloc de fixation pouvant en pratique convenir à divers appareillages, sinon à tous, le nombre de références relatives à ces appareillages se trouve avantageusement pratiquement divisé par deux, seule la référence relative au bloc de fixation venant s'ajouter à l'ensemble de leurs propres références.

De plus, dans le cas où une fixation par vis est retenue, cette fixation se trouve facilitée par l'absence de griffes, et les risques d'un éventuel accident électrique se trouvent réduits.

Enfin, les appareillages concernés étant ainsi systématiquement livrés sans griffe, une fixation par vis, plus fiable dans le temps qu'une fixation par griffes, se trouve avantageusement favorisée, au bénéfice de la sécurité.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un support d'appareillage suivant l'invention, équipé de deux blocs de fixation ;
la figure 2 est, à échelle inférieure, une vue en élévation de ce support d'appareillage, suivant la flèche II de la figure 1 ;
la figure 3 en est, à échelle supérieure, une vue partielle en coupe, suivant la ligne III-III de la figure 1 ;
la figure 4 en est une autre vue partielle en coupe, suivant la ligne IV-IV de la figure 3 ;
la figure 5 est, déduite de la figure 1, une vue partielle en perspective du support d'appareillage suivant l'invention, dépourvu de tout bloc de fixation ;
la figure 6 est, en correspondance avec celle de la figure 5, une vue en perspective d'un tel bloc de fixation, représenté isolément ;
la figure 7 est, à échelle supérieure, une vue partielle en coupe de ce bloc de fixation, suivant la ligne VII-VII de la figure 6 ;
la figure 8 en est une autre vue partielle en coupe, suivant la ligne VIII-VIII de la figure 6 ;
la figure 9 est une vue partielle en coupe qui, analogue à celle de la figure 3, illustre la mise en place d'un tel bloc de fixation sur un support d'appareillage suivant l'invention ;
la figure 10 est une vue en perspective de la griffe dont est équipé ce bloc de fixation ;
la figure 11 est une vue en perspective d'une autre forme de réalisation de cette griffe ;
la figure 12 est une vue partielle en élévation de la vis prévue pour la commande d'une telle griffe, pour une variante de réalisation de cette vis.

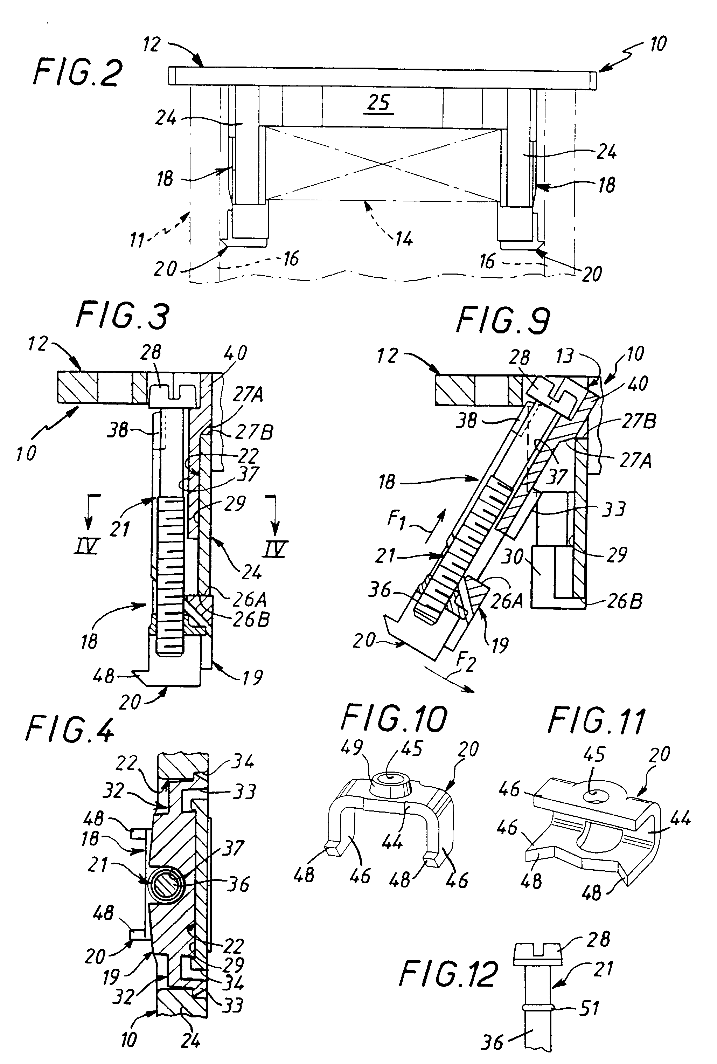

Tel qu'illustré sur ces figures, et de manière connue en soi, le support d'appareillage 10 suivant l'invention est destiné à être rapporté sur une boîte d'encastrement 11, qui est partiellement schématisée, en traits interrompus, sur la figure 2, et, transversalement par rapport à l'axe de cette boîte d'encastrement 11, il comporte un cadre 12, qui forme sa partie de façade, et qui est destiné à demeurer hors de la boîte d'encastrement 11.

Dans la forme de réalisation représentée, le contour extérieur du cadre 12 est globalement quadrangulaire, et par exemple carré, et il en est de même de son contour intérieur, c'est-à-dire du contour de son évidement central 13.

Par cet évidement central 13 du cadre 12, le support d'appareillage 10 est adapté à permettre l'engagement, dans la boîte d'encastrement 11, du mécanisme de l'appareillage à fixer.

Cet appareillage, qui peut être de nature très diverse, n'a pas été représenté sur les figures.

Son mécanisme est cependant partiellement schématisé, en traits interrompus, sur la figure 2, sous la référence générale 14, et, dans la forme de réalisation ainsi schématisée, il s'agit, en pratique, d'un mécanisme fixé par encliquetage.

Pour sa fixation par vis à la boîte d'encastrement 11, le support d'appareillage 10 présente au moins un perçage 15 propre au passage d'une quelconque vis, non représentée.

En pratique, deux perçages 15 sont prévus en positions diamétralement opposées l'une par rapport à l'autre, et ils affectent le cadre 12, dans la partie médiane de deux côtés opposés de celui-ci.

De manière connue en soi, il s'agit de perçages en forme de trou de serrure qui s'étendent globalement circulairement, en étant centrés sur le centre de l'évidement central 13, et, donc, sur l'axe de la boîte d'encastrement 11.

Pour l'intervention des vis correspondantes, la boîte d'encastrement 11 est usuellement équipée de fûts tubulaires 16, qui, en saillie sur la surface interne de sa paroi latérale, s'étendent par exemple sur toute la hauteur de celle-ci.

Les dispositions qui précèdent sont bien connues par elles-mêmes, et, ne relevant pas en propre de la présente invention, elles ne seront pas décrites plus en détail ici.

En pratique, seules seront décrites dans ce qui suit les caractéristiques du support d'appareillage 10 nécessaires à la compréhension de l'invention.

Suivant l'invention, pour une fixation éventuelle par griffe(s) du support d'appareillage 10 à la boîte d'encastrement 11, il est associé, à ce support d'appareillage 10, sous la forme d'un sous-ensemble distinct, au moins un bloc de fixation 18 comportant, globalement, suivant des dispositions décrites plus en détail ci-après, un corps 19 et une griffe 20 qui, sous le contrôle d'une vis 21 montée rotative sur le corps 19, est mobile entre une position escamotée d'attente, représentée en trait continu à la figure 8, et une position déployée de service, schématisée en traits interrompus sur cette figure 8, et le support d'appareillage 10 comporte, en attente, un logement 22, qui est propre à recevoir à la demande un tel bloc de fixation 18, et qui, pour la commande de la vis 21 correspondante, débouche en façade, et, donc, sur le cadre 12.

En pratique, pour la mise en place de deux blocs de fixation 18, le support d'appareillage 10 comporte, en attente, en positions diamétralement opposées l'une par rapport à l'autre, deux logements 22.

Dans la forme de réalisation représentée, ces logements 22 s'étendent chacun respectivement au droit des perçages 15, sur les mêmes côtés du cadre 12 que ceux-ci.

Plus précisément, chacun de ces logements 22 s'étend en creux sur la surface externe d'un flasque 24 qui, sensiblement perpendiculaire au cadre 12, s'étend en saillie sur la surface inférieure de celui-ci, en bordant au moins localement son évidement central 13, et il débouche en façade sur ce cadre 12 à la jonction du flasque 24 avec celui-ci.

Ainsi, deux flasques 24 sont prévus, en positions diamétralement opposées l'une par rapport à l'autre, et ils s'étendent chacun respectivement le long de deux côtés opposés de l'évidement central 13 du cadre 12.

Dans la forme de réalisation représentée, ces flasques 24 sont réunis l'un à l'autre, à leur jonction avec le cadre 12, par deux nervures 25, qui, perpendiculaires, comme eux, au cadre 12, s'étendent le long des deux autres côtés de l'évidement central 13 de celui-ci.

Pour son blocage, en position, dans un logement 22 du support d'appareillage 10, perpendiculairement au cadre 12 de celui-ci, le corps 19 d'un bloc de fixation 18 comporte, à distance l'un de l'autre, à son dos, dans la forme de réalisation représentée, deux épaulements 26A, 27A, pour coopération avec des épaulements 26B, 27B prévus en conséquence dans un tel logement 22.

En pratique, les épaulements 26A, 27A que comporte le corps 19 du bloc de fixation 18 sont tournés l'un vers l'autre, et les épaulements 26B, 27B du logement 22 correspondant sont donc au contraire tournés en sens opposés l'un par rapport à l'autre.

En pratique, également, les deux épaulements 26A, 27A que comporte le corps 19 du bloc de fixation 18 s'étendent globalement transversalement par rapport à la vis 21 correspondante, l'un perpendiculairement à celle-ci, l'autre en oblique par rapport à elle pour faciliter la mise en place de ce bloc de fixation 18 dans le logement 22.

En pratique, enfin, l'épaulement 27A qui s'étend en oblique est celui qui est le plus proche de la tête 28 de la vis 21.

Par son fond 29, le logement 22 est apte à contrebuter le corps 19 du bloc de fixation 18, au dos de celui-ci.

Les épaulements 26B, 27B délimitent chacun, transversalement, pour leur part, ce fond 29, l'un à distance du cadre 12, l'autre à proximité de celui-ci.

Pour l'emboîtement au moins partiel du corps 19 du bloc de fixation 18, le logement 22 forme, latéralement, perpendiculairement à son fond 29 et perpendiculairement au cadre 12, des facettes 30, entre lesquelles est apte à s'insérer ce corps 19.

Du fait des épaulements 26B, 27B, d'une part, et des facettes 30, d'autre part, il est assuré un blocage en position du bloc de fixation 18 dans le logement 22 tant perpendiculairement au cadre 12 que parallèlement à celui-ci, et, plus précisément, que parallèlement au côté concerné de celui-ci.

Dans la forme de réalisation représentée, entre le support d'appareillage 10 et un bloc de fixation 18, interviennent, en outre, des moyens d'encliquetage.

En pratique, ces moyens d'encliquetage comportent, sur le corps 19 d'un tel bloc de fixation 18, au moins un bras 32 doté d'un doigt 33 conformé en crochet, et, en correspondance avec ce doigt 33, sur le flasque 24 concerné du support d'appareillage 10, un évidement 34 propre à l'engagement d'un tel doigt 33.

Dans la forme de réalisation représentée, le corps 19 du bloc de fixation 18 comporte, latéralement, en saillie, deux bras 32, qui forment globalement une croix à mi-hauteur, et, en correspondance, le flasque 24 du support d'appareillage 10 présente, disposés chacun respectivement de part et d'autre du logement 22, deux évidements 34.

Sur une partie au moins de la hauteur du fût 36 de la vis 21 qui l'équipe, le corps 19 du bloc de fixation 18 comporte un logement 37 propre à la réception de celle-ci.

Dans la forme de réalisation représentée, ce logement 37 forme, pour le fût 36 de la vis 21, un berceau, qui s'étend parallèlement au flasque 24 correspondant du support d'appareillage 10, avec sa concavité tournée vers l'extérieur, et, au moins localement, ce logement 37 est partiellement refermé sur plus de 180° par deux lèvres 38 propres à assurer une retenue de cette vis 21 tout en permettant l'engagement à force de celle-ci.

En pratique, ces lèvres 38 ne s'étendent que sur une fraction de la hauteur du logement 37 à compter de la tête 28 de la vis 21.

Dans la forme de réalisation représentée, le corps 19 du bloc de fixation 18 comporte, du côté de la tête 28 de la vis 21 opposé aux lèvres 38, un prolongement 40, qui entoure localement cette tête 28, sur environ 180°, et qui, une fois le bloc de fixation 18 en place sur le support d'appareillage 10, s'étend en bordure de l'évidement central 13 du cadre 12 de celui-ci.

En pratique, ce prolongement 40 s'étend à compter de l'épaulement 27A oblique, à la faveur de celui-ci.

Il rétablit la continuité tant du flasque 24 concerné du support d'appareillage 10 que du cadre 12 de celui-ci, en comblant les parties correspondantes du logement 22 au débouché de ce logement 22 sur ce flasque 24 et sur ce cadre 12.

A la base du logement 37 qu'il présente pour le fût 36 de la vis 21, le corps 19 du bloc de fixation 18 comporte un pan incliné 42 formant came pour la griffe 20.

Dans la forme de réalisation représentée, ce pan incliné 42 s'étend entre deux joues 43 propres au guidage de cette griffe 20.

Il est par exemple incliné à 45°.

Quoi qu'il en soit, il s'étend de part et d'autre du logement 37, en étant tourné à la fois vers l'extrémité libre du fût 36 de la vis 21 et vers l'extérieur.

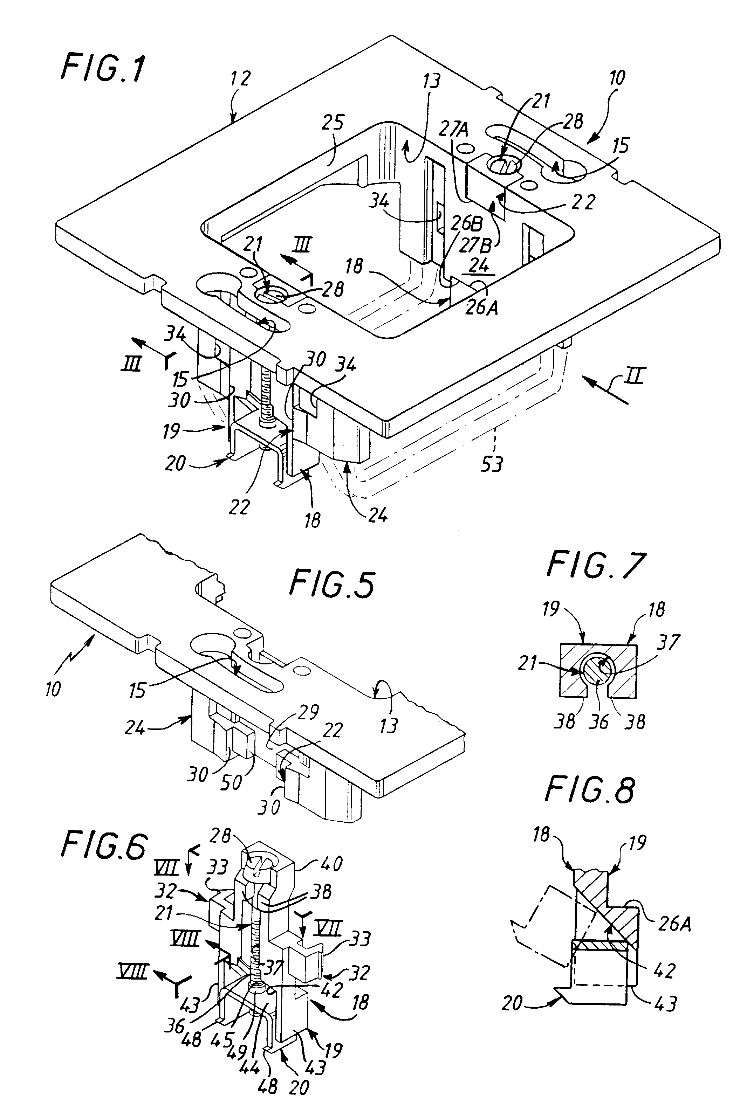

Dans la forme de réalisation représentée sur les figures 1 à 10, la griffe 20 est une pièce en U dont la partie médiane 44 présente un perçage taraudé 45 par lequel elle est en prise avec le fût 36 de la vis 21 et dont chacune des ailes 46 comporte en saillie sur sa tranche, à distance de la partie médiane 44, et tournée vers l'extérieur, au moins une dent 48.

En pratique, le perçage taraudé 45 s'étend à la faveur d'une collerette 49 venue d'un seul tenant de la partie médiane 44 par repoussage local de la matière de celle-ci.

Dans la forme de réalisation représentée, cette collerette 49 s'étend en saillie sur la surface externe de cette partie médiane 44, mais il va de soi qu'elle pourrait tout aussi bien s'étendre en saillie sur sa surface interne.

Le support d'appareillage 10 suivant l'invention est préférentiellement réalisé en matière synthétique, par moulage de celle-ci, et il est normalement livré sans bloc de fixation 18.

Pour sa fixation par griffes, il faut disposer, en sus, de deux blocs de fixation 18.

Pour sa mise en place, un tel bloc de fixation 18 est d'abord engagé en biais dans le logement 22 correspondant, avec le prolongement 40 de son corps 19 en avant, tel que schématisé par la flèche F1 sur la figure 9.

Une fois le prolongement 40 du corps 19 introduit dans le débouché du logement 22 sur le flasque 24 et sur le cadre 12 du support d'appareillage 10, le bloc de fixation 18 est redressé, par basculement en direction du flasque 24, suivant la flèche F2 de la figure 9.

Au terme de ce basculement, les bras 32 du corps 19 du bloc de fixation 18 viennent s'encliqueter par leur doigt 33 dans les évidements 34 du flasque 24, par déformation élastique temporaire de ce doigt 33.

Le support d'appareillage 10 étant ainsi équipé de deux blocs de fixation 18, il suffit, pour sa fixation à la boîte d'encastrement 11, d'agir en conséquence, de manière usuelle, sur les vis 21.

Au cours d'une telle action, les griffes 20 se déplacent le long du pan incliné 42 du corps 19 des blocs de fixation 18, en prenant appui sur ce pan incliné 42 par celle des arêtes de leur partie médiane 44 qui est opposée à leur dent 48.

Tel que schématisé en traits interrompus sur la figure 8 pour l'une d'elles, les griffes 20 passent ainsi en position déployée de service, moyennant un léger basculement des vis 21 qui les commandent, et elles viennent donc mordre sur les parois de la boîte d'encastrement 11.

Ainsi qu'on le notera, les flasques 24 du support d'appareillage 10 sont alors avantageusement contrebutés par le mécanisme 14 de l'appareillage concerné.

Dans la variante de réalisation représentée sur la figure 11, chaque griffe 20 est, comme précédemment, une pièce en U, mais le perçage taraudé 45 est présent sur l'une de ses ailes 46 cependant que l'autre de ses ailes 46 comporte en saillie sur sa tranche au moins une dent 48.

C'est donc dans ce cas par le congé de raccordement reliant sa partie médiane 44 à l'aile 46 présentant le perçage taraudé 45 qu'elle prend appui contre le pan incliné 42 du corps 19 du bloc de fixation 18, au bénéfice d'un meilleur glissement contre celui-ci.

Si désiré, il peut être procédé à la dépose d'un bloc de fixation 18.

Pour faciliter cette dépose, il est prévu, en creux sur le fond 29 du logement 22 correspondant, un décrochement 50 propre à l'insertion d'un outil au dos du corps 19 du bloc de fixation 18, pour l'exercice d'une poussée par effet de levier sur celui-ci.

Dans la variante de réalisation représentée sur la figure 12, la vis 21 d'un bloc de fixation 18 comporte, pour sa retenue axiale, un bourrelet 51, qui s'étend annulairement en saillie sur son fût 36, à distance de sa tête 28, au-delà des lèvres 38 du logement 37 dans lequel elle est disposée par rapport à cette tête 28.

La griffe 20 avec laquelle cette vis 21 est en prise peut ainsi être commandée de manière positive en déplacement dans un sens ou dans l'autre.

Enfin, suivant la variante de réalisation schématisée en traits interrompus sur la figure 1, les deux flasques 24 du support d'appareillage 10 peuvent être réunis l'un à l'autre, à distance du cadre 12, par au moins une entretoise 53.

Par exemple, et tel que schématisé, deux entretoises 53 peuvent ainsi être prévues, en étant chacune respectivement disposées de part et d'autre des logements 22 que forment ces flasques 24.

Bien entendu, la présente invention ne se limite pas aux formes de réalisation décrites et représentées, mais englobe toute variante d'exécution et/ou de combinaison de leurs divers éléments dans le cadre des revendications.

## Revendications

1. Support d'appareillage à rapporter sur une boîte d'encastrement (11), du genre présentant au moins un perçage (15) propre au passage d'une vis pour sa fixation par vis à une telle boîte d'encastrement (11), caractérisé en ce que, pour sa fixation éventuelle par griffe(s) à cette boîte d'encastrement (11), il lui est associé, sous la forme d'un sous-ensemble distinct, au moins un bloc de fixation (18) comportant un corps (19) et une griffe (20) qui, sous le contrôle d'une vis (21) montée rotative sur ledit corps (19), est mobile entre une position escamotée d'attente et une position déployée de service, et en ce qu'il comporte, en attente, un logement (22), qui est propre à recevoir à la demande un tel bloc de fixation (18), et qui, pour la commande de la vis (21) correspondante, débouche en façade.

2. Support d'appareillage suivant la revendication 1, caractérisé en ce que le corps (19) du bloc de fixation (18) comporte, à distance l'un de l'autre à son dos, deux épaulements (26A, 27A), pour coopération avec des épaulements (26B, 27B) prévus en conséquence dans le logement (22) correspondant.

3. Support d'appareillage suivant la revendication 2, caractérisé en ce que les deux épaulements (26A, 27A) que comporte le corps (19) du bloc de fixation (18) sont tournés l'un vers l'autre.

4. Support d'appareillage suivant l'une quelconque des revendications 2, 3, caractérisé en ce que les deux épaulements (26A, 27A) que comporte le corps (19) du bloc de fixation (18) s'étendent globalement transversalement par rapport à la vis (21), l'un perpendiculairement à celle-ci, l'autre en oblique par rapport à elle.

5. Support d'appareillage suivant l'une quelconque des revendications 1 à 4, caractérisé en ce que, sur une partie au moins de la hauteur du fût (36) de la vis (21), le corps (19) du bloc de fixation (18) comporte un logement (37) propre à la réception de celle-ci.

6. Support d'appareillage suivant la revendication 5, caractérisé en ce que ledit logement (37) forme un berceau pour le fût (36) de la vis (21), et, au moins localement, il est partiellement refermé sur plus de 180° par deux lèvres (38).

7. Support d'appareillage suivant la revendication 6, caractérisé en ce que la vis (21) comporte un bourrelet (51) annulairement en saillie sur son fût (36), à distance de sa tête (28), au-delà des lèvres (38) du logement (37) par rapport à ladite tête (28).

8. Support d'appareillage suivant l'une quelconque des revendications 1 à 7, caractérisé en ce que le corps (19) du bloc de fixation (18) comporte un pan incliné (42) formant came pour la griffe (20).

9. Support d'appareillage suivant l'une quelconque des revendications 1 à 8, caractérisé en ce que la griffe (20) est une pièce en U, dont la partie médiane (44) présente un perçage taraudé (45) par lequel elle est en prise avec le fût (36) de la vis (21) et dont chacune des ailes (46) comporte en saillie sur sa tranche au moins une dent (48).

10. Support d'appareillage suivant l'une quelconque des revendications 1 à 8, caractérisé en ce que la griffe (20) est une pièce en U, dont une des ailes (46) présente un perçage taraudé (45) par lequel elle est en prise avec le fût (36) de la vis (21) et dont l'autre des ailes (46) comporte en saillie sur sa tranche au moins une dent (48).

11. Support d'appareillage suivant l'une quelconque des revendications 1 à 10, caractérisé en ce que, entre lui et le bloc de fixation (18), interviennent des moyens d'encliquetage.

12. Support d'appareillage suivant l'une quelconque des revendications 1 à 11, caractérisé en ce que, le perçage (15) propre au passage d'une vis étant prévu sur un cadre (12) formant la partie de façade de l'ensemble, le logement (22) prévu pour le bloc de fixation (18) s'étend en creux sur la surface externe d'un flasque (24) qui, sensiblement perpendiculaire au cadre (12), s'étend en saillie sur la surface inférieure de celui-ci, et il débouche sur ledit cadre (12) à la jonction du flasque (24) avec celui-ci.

13. Support d'appareillage suivant les revendications 11, 12, prises conjointement, caractérisé en ce que les moyens d'encliquetage comportent, sur le corps (19) du bloc de fixation (18), au moins un bras (32) doté d'un doigt (33) conformé en crochet, et, en correspondance avec ce doigt (33), sur le flasque (24), un évidement (34) propre à l'engagement de ce doigt (33).

14. Support d'appareillage suivant la revendication 12, caractérisé en ce que le corps (19) du bloc de fixation (18) comporte un prolongement (40), qui entoure localement la tête (28) de lavis (21).

15. Support d'appareillage suivant la revendication 12, caractérisé en ce que le logement (22) prévu pour le bloc de fixation (18) s'étend au droit du perçage (15) propre au passage d'une vis.

16. Support d'appareillage suivant l'une quelconque des revendications 1 à 15, caractérisé en ce que, pour la mise en place de deux blocs de fixation (18), il comporte, en attente, en positions diamétralement opposées l'une par rapport à l'autre, deux logements (22).

17. Support d'appareillage suivant les revendications 12 et 16, prises conjointement, caractérisé en ce que, deux flasques (24) étant prévus, à raison d'un par logement (22), lesdits flasques (24) sont réunis l'un à l'autre à distance du cadre (12) par au moins une entretoise (53).

18. Bloc de fixation, caractérisé en ce que, pour sa mise en oeuvre sur un support d'appareillage (10) conforme à l'une quelconque des revendications 1 à 17, il comporte un corps (19) et une griffe (20) qui, sous le contrôle d'une vis (21) montée rotative sur ledit corps (19), est mobile entre une position escamotée d'attente et une position déployée de service.

## Patentansprüche

1. An einer Einbaudose (11) anzubringender Geräteträger, der mindestens eine Bohrung (15) aufweist, die für den Durchgang einer Schraube für seine Befestigung durch Schrauben an einer solchen Einbaudose (11) geeignet ist, dadurch gekennzeichnet, daß ihm, für seine eventuelle Befestigung an dieser Einbaudose (11) durch Klaue(n), in Form einer getrennten Untereinheit mindestens ein Befestigungsblock (18) zugeordnet ist, der einen Körper (19) und eine Klaue (20) aufweist, die unter der Steuerung durch eine drehbar an dem Körper (19) montierte Schraube (21) zwischen einer eingezogenen Bereitschaftsstellung und einer ausgefahrenen Betriebsstellung beweglich ist, und daß er in Bereitschaft eine Aussparung (22) aufweist, die geeignet ist, auf Wunsch einen solchen Befestigungsblock (18) aufzunehmen, und die zur Betätigung der entsprechenden Schraube (21) an der Frontseite ausmündet.

2. Geräteträger nach Anspruch 1, dadurch gekennzeichnet, daß der Körper (19) des Befestigungsblocks (18) in einem Abstand voneinander auf seiner Rückseite zwei Schultern (26A, 27A) zum Zusammenwirken mit Schultern (26B, 27B) aufweist, die in Entsprechung in der entsprechenden Aussparung (22) vorgesehen sind.

3. Geräteträger nach Anspruch 2, dadurch gekennzeichnet, daß die beiden Schultern (26A, 27A), die der Körper (19) des Befestigungsblocks (18) aufweist, einander zugewandt sind.

4. Geräteträger nach einem der Ansprüche 2, 3, dadurch gekennzeichnet, daß die beiden Schultern (26A, 27A), die der Körper (19) des Befestigungsblocks (18) aufweist, sich global quer bezüglich der Schraube (21) erstrecken, und zwar die eine senkrecht zu dieser und die andere schräg zu ihr.

5. Geräteträger nach einem der Ansprüche 1 bis 4, dadurch gekennzeichnet, daß der Körper (19) des Befestigungsblocks (18) mindestens auf einem Teil der Höhe des Schaftes (36) der Schraube (21) eine Aussparung (37) aufweist, der für deren Aufnahme geeignet ist.

6. Geräteträger nach Anspruch 5, dadurch gekennzeichnet, daß die Aussparung (37) eine Lagerung für den Schaft (36) der Schraube (21) bildet und mindestens örtlich über mehr als 180° durch zwei Lippen (38) partiell geschlossen ist.

7. Geräteträger nach Anspruch 6, dadurch gekennzeichnet, daß die Schraube (21) einen Wulst (51) aufweist, der ringförmig an ihrem Schaft (36) in einem Abstand von ihrem Kopf (28) und bezüglich dieses Kopfes (28) jenseits der Lippen (38) der Aussparung (37) vorsteht.

8. Geräteträger nach einem der Ansprüche 1 bis 7, dadurch gekennzeichnet, daß der Körper (19) des Befestigungsblocks (18) eine Schrägfläche (42) aufweist, die eine Steuerfläche für die Klaue (20) bildet.

9. Geräteträger nach einem der Ansprüche 1 bis 8, dadurch gekennzeichnet, daß die Klaue (20) ein U-förmiges Teil ist, dessen Mittelteil (44) eine Gewindebohrung (45) aufweist, durch die es mit dem Schaft (36) der Schraube (21) in Eingriff ist, und von dem jeder der Schenkel (46) auf seiner Kante vorstehend mindestens einen Zahn (48) aufweist.

10. Geräteträger nach einem der Ansprüche 1 bis 8, dadurch gekennzeichnet, daß die Klaue (20) ein U-förmiges Teil ist, von dem einer der Schenkel (46) eine Gewindebohrung (45) aufweist, durch die es mit dem Schaft (36) der Schraube (21) in Eingriff ist, und dessen anderer Schenkel (46) auf seiner Kante vorstehend mindestens einen Zahn (48) aufweist.

11. Geräteträger nach einem der Ansprüche 1 bis 10, dadurch gekennzeichnet, daß zwischen ihm und dem Befestigungsblock (18) Einrastmittel vorgesehen sind.

12. Geräteträger nach einem der Ansprüche 1 bis 11, dadurch gekennzeichnet, daß, wenn die Bohrung (15) für den Durchgang einer Schraube auf einem den Frontteil der Einheit bildenden Rahmen (12) vorgesehen ist, die für den Befestigungsblock (18) vorgesehene Aussparung (22) sich auf der Außenfläche einer Wange (24) vertieft erstreckt, die sich im wesentlichen senkrecht zum Rahmen (12) auf dessen Unterseite vorstehend erstreckt, und an diesem Rahmen (12) an der Verbindungsstelle zwischen der Wange (24) und diesem ausmündet.

13. Geräteträger nach den Ansprüchen 11, 12 zusammen, dadurch gekennzeichnet, daß die Einrastmittel auf dem Körper (19) des Befestigungsblocks (18) mindestens einen mit einem hakenförmigen Finger (33) versehenen Arm (32) und in Entsprechung zu diesem Finger (33) auf der Wange (24) eine Ausnehmung (34) aufweisen, die für das Eintreten dieses Fingers (33) geeignet ist.

14. Geräteträger nach Anspruch 12, dadurch gekennzeichnet, daß der Körper (19) des Befestigungsblocks (18) eine Verlängerung (40) aufweist, die örtlich den Kopf (28) der Schraube (21) umgibt.

15. Geräteträger nach Anspruch 12, dadurch gekennzeichnet, daß die für den Befestigungsblock (18) vorgesehene Aussparung sich auf Höhe der Bohrung (15) für den Durchgang einer Schraube erstreckt.

16. Geräteträger nach einem der Ansprüche 1 bis 15, dadurch gekennzeichnet, daß er für die Anbringung von zwei Befestigungsblöcken (18) in Bereitschaft in zueinander diametral entgegengesetzten Stellungen zwei Aussparungen (22) aufweist.

17. Geräteträger nach den Ansprüchen 12 und 16 zusammen, dadurch gekennzeichnet, daß, wenn zwei Wangen (24) vorgesehen sind, und zwar eine pro Aussparung (22), diese Wangen (24) in einem Abstand vom Rahmen (12) durch mindestens eine Strebe (53) miteinander verbunden sind.

18. Befestigungsblock, dadurch gekennzeichnet, daß er für seine Verwendung auf einem Geräteträger (10) nach einem der Ansprüche 1 bis 17, einen Körper (19) und eine Klaue (20) aufweist, die unter der Steuerung durch eine auf dem Körper (19) drehbar montierte Schraube (21) zwischen einer eingezogenen Bereitschaftsstellung und einer ausgefahrenen Betriebsstellung beweglich ist.

## Claims

1. Equipment support for attachment to a mounting box (11), of the type having at least one bore (15) for the passage of a screw for its fixing by means of a screw to such a mounting box (11), characterised in that for the possible fixing thereof by means of clamp(s) to said mounting box (11), there is connected thereto, in the form of a distinct sub-assembly, at least one fixing block (18) comprising a body (19) and a clamp (20) which, controlled by a screw (21) mounted in a rotatable manner on said body (19), is moveable between a retracted, ready position and an in-service position, and in that it comprises, in readiness, a housing (22) which is for receiving, when required, such a fixing block (18) and which opens out towards the front for the controlling of the corresponding screw (21).

2. Equipment support according to claim 1, characterised in that the body (19) of the fixing block (18) comprises, at a distance apart from one another on its rear, two shoulders (26A, 27A) for cooperating with shoulders (26B, 27B) accordingly provided in the corresponding housing (22).

3. Equipment support according to claim 2, characterised in that the two shoulders (26A, 27A) of the body (19) of the fixing block (18) are turned towards one towards the other.

4. Equipment support according to any one of claims 2, 3, characterised in that the two shoulders (26A, 27A) which the body (19) of the fixing block (18) comprises, extend in a generally transverse manner with respect to the screw (21), one perpendicularly thereto, the other obliquely with respect thereto.

5. Equipment support according to any one of claims 1 to 4, characterised in that over a part at least of the height of the shaft (36) of the screw (21), the body (19) of the fixing block (18) comprises a housing (37) for receiving said screw.

6. Equipment support according to claim 5, characterised in that said housing (37) forms a cradle for the shaft (36) of the screw (21) and at least locally it is partially closed over more than 180° by two lips (38).

7. Equipment support according to claim 6, characterised in that the screw (21) comprises a bead (51) projecting in an annular manner upon its shaft (36) at a distance from its head (28), beyond the lips (38) of the housing (37) with respect to said head (28).

8. Equipment support according to any one of claims 1 to 7, characterised in that the body (19) of the fixing block (18) comprises an inclined face (42) forming a cam for the clamp (20).

9. Equipment support according to any one of claims 1 to 8, characterised in that the clamp (20) is a U-shaped piece, the median part (44) of which has a threaded bore (45) by means of which it engages with the shaft (36) of the screw (21), and each of the legs (46) of which comprises at least one tooth (48) projecting from its edge.

10. Equipment support according to any one of claims 1 to 8, characterised in that the clamp (20) is a U-shaped piece, one of the legs (46) of which has a threaded bore (45) by means of which it engages with the shaft (36) of the screw (21), and the other leg (46) of which comprises at least one tooth (48) projecting from its edge.

11. Equipment support according to any one of claims 1 to 10, characterised in that latching means are provided between said support and the fixing block (18).

12. Equipment support according to any one of claims 1 to 11, characterised in that as the bore (15) for the passage of a screw is provided on a frame (12) forming the front part of the assembly, the housing (22) provided for the fixing block (18) extends in a recessed manner in the external surface of a flange (24) which is substantially perpendicular to the frame (12), extending in a projecting manner from the lower surface thereof, and it joins said frame (12) at the junction of the flange (24) therewith.

13. Equipment support according to claims 11, 12 taken together, characterised in that the latching means comprises, on the body (19) of the fixing block (18), at least one arm (32) provided with a catch (33) configured as a hook, and on the flange (24), corresponding with said catch (33), a recess (34) for engaging with said catch (33).

14. Equipment support according to claim 12, characterised in that the body (19) of the fixing block (18) comprises an extension (40) which locally surrounds the head (28) of the screw (21).

15. Equipment support according to claim 12, characterised in that the housing (22) provided for the fixing block (18) extends in line with the bore (15) for the passage of a screw.

16. Equipment support according to any one of claims 1 to 15, characterised in that for the provision of two fixing blocks (18), it comprises, in readiness, two housings (22) in diametrically opposite positions with respect to one another.

17. Equipment support according to claims 12 and 16, taken together, characterised in that as two flanges (24) are provided, that is to say one per housing (22), said flanges (24) are joined one to the other at a distance from the frame (12) by at least one cross-member (53).

18. Fixing block, characterised in that for its implementation on an equipment support (10) in accordance with any one of claims 1 to 17, it comprises a body (19) and a clamp (20) which, controlled by a screw (21) mounted in a rotatable manner on said body (19), is moveable between a retracted, ready position and an in-service position.
